# EUROPEAN PATENT APPLICATION

(11) **EP 0 685 862 A1**
(43) Date of publication of application: **06.12.1995**
(21) Application number: 94830270.8
(22) Date of filing: 31.05.1994
(51) Int. Cl.: H01H 35/26, G01L 19/02, G01L 9/02

(54) **An adjustable-sensitivity pressure meter**

(71) Applicant: Gallone, Cesare, Camberley, Surrey (GB)
(72) Inventor: Gallone, Cesare, Camberley, Surrey (GB)
(74) Representative: Righetti, Giuseppe

(57) **Abstract**

It is described a pressure meter comprising a diaphragm (8) operatively fastened between a base body (2) and a protection cap (4) mutually engaged by close fit. The diaphragm (8) is elastically deformable by effect of pressure variations within a pressurization chamber (3) forced in the base body (2), against the action exerted by a counterspring (14) for activating a signalling device (5) when the pressure value exceeds a predetermined threshold. An adjusting ring nut (16) is screwed down on an end portion (17) of the protection cap (4) and acts on a plate (18) offering a rest surface to the spring (14). The ring nut (16) has a mesh toothing (21) operatively engaged by a power-driven pinion gear for adjusting the preloading force exerted by the spring (14) through screwing and unscrewing of the ring nut itself.

## Description

The present invention relates to an adjustable-sensitivity pressure meter, of the type comprising: a base body exhibiting a pressurization chamber put into fluid communication with an environment the pressure variations of which are to be detected; a protection cap engaged to said base body; a detection diaphragm operatively engaged between the base body and the protection cap for hermetically sealing the pressurization chamber, said diaphragm being elastically deformable as a result of pressure variations within the pressurization chamber itself; transducer means operatively connected to said diaphragm for mechanically transmitting the deformations undergone by the diaphragm itself to a signalling device; at least one counterspring acting on the diaphragm so as to exert thereon a gauged preloading force in opposition to a pressure existing in the pressurization chamber; and adjusting means acting on said counterspring in order to gauge the value of the preloading force exerted onto the diaphragm by the counterspring itself.

The pressure meter in reference applies for example to vacuum cleaners and liquid sucking devices in apparatus for washing fitted carpets and carpets, in boilers and the like, where the fluid in contact with the flexible diaphragm may consist for example of air, water and/or low- or medium-pressure steam.

It is known that there are different types of pressure meters designed for example to detect the pressure of a gas or a liquid held in a container, essentially comprising a flexible diaphragm sealingly engaged at the periphery thereof between a base body and a protection cap rigidly linked to each other. Defined in the base body is a pressurization chamber that is put into fluid communication with the environment the pressure of which is to be detected. The diaphragm directly exposed to the pressurization chamber, is therefore subjected to elastic deformations on the occurence of pressure variations within the controlled environment and, as a result, in the pressurization chamber itself.

By suitable transducer means the diaphragm deformations are mechanically transmitted to a microswitch or other signalling device, arranged to selectively close and open an electric circuit in order to signal that the detected pressure value has exceeded a predetermined threshold.

More particularly, in a pressure meter known from European Patent Application No. 0 552 591, in the name of the same Applicant, the transducer means essentially comprises a cylindrical pin slidably passing through the protection cap at a guide hole exactly conformed to the size of the pin itself. Due to the elastic deformations undergone by the diaphragm, the pin is axially moved for activation of the microswitch operatively engaged on the protection cap itself. The pressure value to which operation of the microswitch corresponds is determined based on the elastic action exerted by a couterspring operatively interposed between the protection cap and the diaphragm, coaxially about the transducer pin.

The pressure meter described in the above identified patent application has many qualities in terms of safety of the microswitch which is protected against accidental splashes of water or other liquid present in the pressurization chamber in case of breakage of the diaphragm. In fact, should the diaphragm break, the liquid under pressure would be prevented from reaching the microswitch and would be suitably deflected to the outside of the protection cap through appropriate vents arranged laterally thereon.

There are also pressure meters provided with adjusting means acting on the preloading spring so as to enable variation and/or adjustment of the pressure value to which operation of the microswitch is to correspond.

In pressure meters of the above type, described for example in German document DE 1218587 and US patent No. 3 393 612, it is essentially provided that a tubular threaded element be operatively engaged by screwing through the protection cap, which element is coaxially passed through by the transducer pin and exhibits, at an end thereof internal to the protection cap, a locating seat for a corresponding end of the counterspring.

The tubular threaded element has, at the outside of the protection cap, a hexagonal head at which it is engaged, either manually and/or with the aid of appropriate tools, for carrying out screwing or unscrewing of same relative to the protection cap. The screwing and unscrewing actions give rise to a corresponding axial displacement of the end of the tubular element in abutment relationship onto the spring, which results in a variation of the preloading force exerted by said spring on the diaphragm.

Pressure meters of the above type surely have important advantages in terms of precision in operation, by virtue of the possibility of calibrating the spring preloading in a precise manner, as well as versatility of use, in that the same pressure meter can be used for controlling the intervention of the corresponding switch at any pressure values selected within a predetermined operating range.

However, it is to be noted that they involve many complications in the production processes, due to the necessity to carry out calibration and control of each of the produced pressure meters manually.

In addition, the presence of the tubular threaded element, projecting coaxially from the protection cap, in many cases makes it impossible to obtain pressure meters of sufficiently reduced sizes, in that the microswitch must be necessarily mounted spaced apart a great distance from the protection cap.

It is an object of the invention to substantially solve the problems of the known art, by providing an adjustable-sensitivity pressure meter such designed that the operations to be executed for the purpose of calibrating the spring can be also performed in a thoroughly automated and/or servoassisted manner, both during the production step and during the use of the pressure meter itself, by arranging appropriate control servomechanisms.

In particular, the pressure meter in accordance with the invention is conceived in such a manner that it is possible to arrange on the apparatus to which the pressure meter is interlocked, motors or servomechanisms designed to act on the adjusting ring nut for automatically varying the intervention sensitivity of the pressure meter depending on variation of given boundary parameters.

A further object of the invention is to provide a pressure meter in which the excellent qualities in terms of safety of use proper to pressure meters of the type described in said European Patent Application No. 0 552 591 may be maintained.

The foregoing and further objects that will become more apparent in the course of the present description are substantially achieved by an adjustable-sensitivity pressure meter, characterized in that said adjusting means comprises: an adjusting ring nut operatively engaged to the protection cap through respective coupling screw threads and acting on said counterspring to selectively cause an increase and a reduction of said preloading force following a screwing action and an unscrewing action of the ring nut itself; mesh means operatively engaged by power-driven control means for driving the ring nut itself in rotation.

The description of a preferred embodiment of an adjustable-sensitivity pressure meter in accordance with the invention is now given by way of non-limiting example, with reference to the accompanying drawings, in which:
- Fig. 1 is a perspective and exploded view of a pressure meter according to the invention;
- Fig. 2 is a perspective view of the pressure meter in an assembled condition;

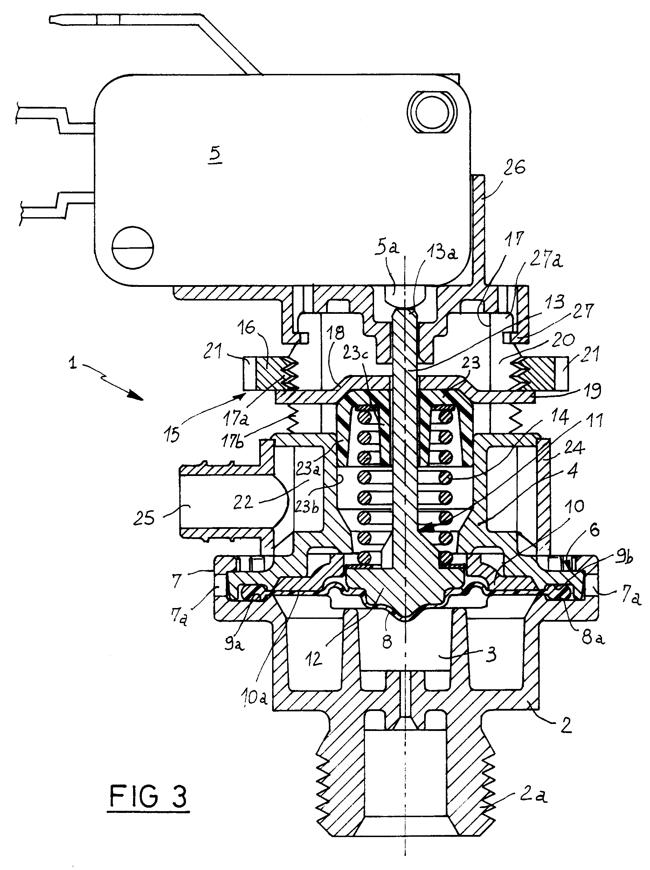

- Fig. 3 is a diametrical sectional view of the pressure meter shown in Fig. 2.

Referring to the drawings, an adjustable-sensitivity pressure meter in accordance with the invention has been generally identified by reference numeral 1.

Pressure meter 1 comprises a base body 2 within which a pressurization chamber 3 is formed which is designed to be put into fluid communication with the environment the pressure of which is to be controlled. The connection between said pressurization chamber 3 and environment can be achieved for example by a pipeline engaged at its end to a threaded union 2a suitably arranged on the base body 2, or by directly screwing such a threaded union to an appropriate seat disposed for example in a tank inside which fluid under pressure is contained.

Connected to the base body 2 is a protection cap 4 carrying a microswitch 8 or another appropriate signalling device on its side opposite to the base body.

Advantageously, the connection between the protection cap 4 and base body 2 takes place by coupling means 6 that, in a preferential solution, consists of fitting teeth 6a perimetrically distributed along a terminal edge 7 of the base body 2 and designed to be snap-fitted to a perimetric coupling border 6b exhibited by the protection cap 4. A plurality of openings 7a distributed along said terminal edge 7 give the latter an appropriate elasticity, sufficient to cause an efficient snap-fitting between the perimetric border 6b and fitting teeth 6a.

If the pressure meter is intended for use at rather high pressures, the connection between the base body 2 and protection cap 4 can be at all events strenghtened by a closure metal ring folded over about the terminal edge 7 in a manner known per se.

Operatively interposed between the base body 2 and protection cap 4 is a detection diaphragm 8 the perimetric edge 8a of which is sandwiched between respective holding surfaces 9a, 9b exhibited by the base body and protection cap.

The diaphragm 8 is therefore disposed in such a manner that it hermetically seals the pressurization chamber 3 relative to the protection cap 4 and lends itself to be elastically deformed by effect of pressure variations occurring within the pressurization chamber correspondingly with pressure variations occurring within the controlled environment.

An optional annular counter-disc 10 operatively housed in the protection cap 4 has an annulus-shaped surface 10a disposed in contact relationship on the diaphragm 8, so as to stiffen it by suitably reducing the flexional oscillations due to the pressure variations occurring in the pressurization chamber 3. By arranging counter-discs 10 having different size features during the production step, it is possible to selectively adapt the pressure meter 1 to operation within a desired range of working pressures, by merely selecting the appropriate disc.

The pressure meter 1 further comprises transducer means 11 operatively connected to the diaphragm 8 to mechanically transmit the deformation undergone by said diaphragm to the microswitch 5 or other signalling device. In known manner, this transducers means 11 essentially comprises an actuator disc 12 acting coaxially on the diaphragm 8 on the opposite side with respect to the pressurization chamber 3 and carrying a drive rod 13 acting, by an end portion 13a thereof, on an actuation key 5a provided by the microswitch 5.

Disposed coaxially about the drive rod 13 is at least one counterspring 14 that, through the actuator disc 12, acts on the diaphragm 8 to exert thereon a preloading gauged force in opposition to the pressure existing in the pressurization chamber 3.

Adjusting means generally identified by 15 acts on the counterspring 14 in order to gauge the value of the preloading force exerted by said spring on the diaphragm 8. According to the present invention, such adjusting means 15 advantageously comprises at least one adjusting ring nut 16 operatively engaged to the closure cap 4 through respective coupling screw threads 17a, 17b. The adjusting ring nut 16 lends itself to interact with the counterspring 14 so as to selectively cause an increase and a reduction in the preloading force exerted by said spring, as a result of a screwing action and an unscrewing action respectively exerted on the ring nut.

In greater detail, the adjusting ring nut 16, operatively engaged about a cylindrical end portion 17 of the protection cap 4, is operatively interconnected with the counterspring 14 through a connecting plate 18 offering a rest surface to the counterspring 14, on the opposite side with respect to the diaphragm 8. The plate 18, slidably passed through by the drive rod 13, is peripherally provided with radial extensions 19 each of which is slidably guided through a corresponding slot formed in the cylindrical end portion 17 and, by effect of the counterspring itself, acts in a thrust relationship against the adjusting ring nut 16.

Still in accordance with the present invention, also associated with the pressure meter 1 is mesh means operatively engaged by power-driven control means for operating in rotation the ring nut itself.

In greater detail, in a preferential solution said mesh means essentially comprises a meshing toothing 21 distributed along a circular perimetric surface exhibited by the adjusting ring nut 16. Such a toothing 21 is operatively engaged by an actuating pinion gear being part of said power-driven control means, not shown as not of importance to the ends of the invention; at all events said power-driven control means may consist of an electric reduction motor, operation of which is controlled by an encoder interlocked to an electronic control unit.

Said power-driven control means can be arranged in combination with the machinery used in automated systems for pressure meter assembling, in order to carry out calibration of the pressure meter intervention pressure. Irrangement of power-driven control means on the apparatus with which the pressure meter is actually utilized may be also provided. In this case, this power-driven means enables possible corrections in the pressure meter calibration to be automatically carried out, as well as modifications of said calibration depending on changes in given boundary parameters detected by appropriate sensors.

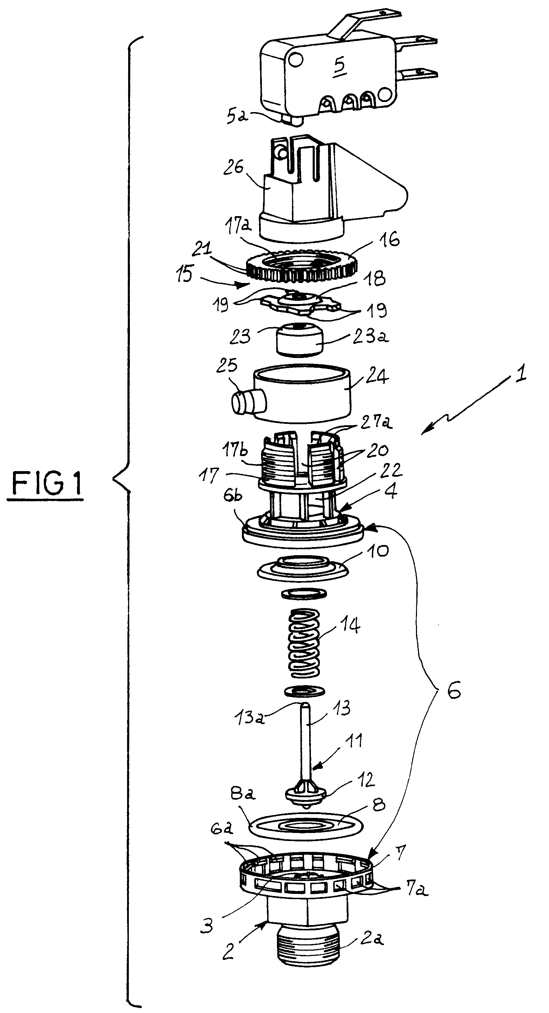

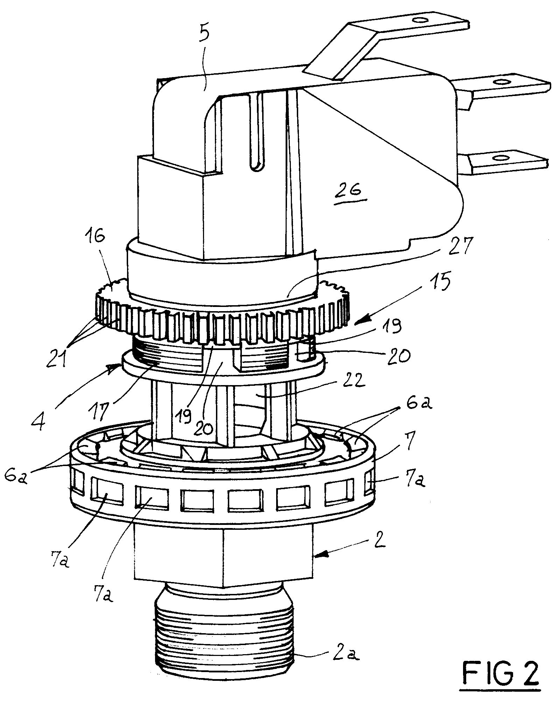

According to a further feature of the present invention, the protection cap 4 is provided with a plurality of vents 22 best shown in Figs. 1 and 2, the presence of which enables the microswitch 5 to be protected against short circuit risks, should the diaphragm 8 accidentally break, in which case the protection cap 4 would be impinged on by liquids coming from the container under pressure to which the pressure meter itself is connected. In fact, vents 22 advantageously lend themselves to evacuate radially outwardly said liquids coming from the pressurization chamber 3.

In order to achieve a greater protection for the microswitch, provision may be also made for at least one closing element 23 to be disposed intermediate the connecting plate 18 and corresponding end of the return spring 14. Said closing element 23 is provided with an annular sealing lip 23a sealingly operating in a slidable manner along an inner cylindrical surface 23b exhibited by the protection cap 4 and is slidably passed through by the drive rod 13 at a tubular portion 13a coaxially formed in the closing element itself and the shape of which exactly matches that of the rod 13.

In addition, still for the purpose of avoiding any possibility that the liquids will come in contact with electric parts associated with the pressure meter and/or apparatus in which it is installed, at least one annular conveying band 24 (not shown in Fig. 2) may be provided to advantage. Said band 24 encircles the closing cap 4 at the vents 22 and is provided with at least one outlet nozzle 25 radially projecting outwardly in order to convey the liquids from vents 22 away from the protection cap 4, possibily through a discharge tube fitted on the nozzle itself.

In a preferential embodiment, the microswitch 5 or an equivalent signalling device is provided to be mounted on a support element 26 rotatably engaged to the protection cap 4. To this end, the support element 26 is provided with at least one circumferential relief 27 engaged by snap fit with curved teeth 27a formed along a terminal edge of the protection cap 4. In greater detail, the curved teeth 27a are formed at the free end of the cylindrical end portion 17 and are spaced from each other by said slots 20.

After the above description, operation of the pressure meter in reference does not need further particular explanations.

The present invention attains the intended purposes.

The arrangement of the adjusting ring nut 16 directly screwed down about the protection cap 4, as well as the arrangement of the meshing toothing 21 associated with the ring nut itself enable power-driven means to be utilized in order to achieve the calibration of the spring preloading in a thoroughly automated manner at the manufacture, when mounting has been completed, as well as adjustment of said preloading if said power-driven means is associated with the pressure meter at the time of use.

For the spring calibration, reference may be made to advantage to the positioning of the ring nut along the end portion 17 of the protection cap 4, for example by causing the ring nut itself, for the purpose of achieving a desired preloading, to carry out a number of turns or turn fractions adapted to impose a corresponding preloading set to the spring 14.

Alternatively, calibration can be carried out by creating a predetermined pressure value in the pressurization chamber 3 and causing rotation of the ring nut 16 starting from one of its end-of-stroke positions, until changeover of the microswitch 5 is caused.

Calbiration of the spring carried out in an automated manner represents an important advantage for production as compared to the state of the art where such an operation is to be carried out manually when assembling has been completed.

In addition, the possibility of mounting the power-driven control means to the apparatus with which the pressure meter is associated undoubtedly involves new possibilities of use of the pressure meter itself, which have not been achieved as far as today with pressure meters of the conventional type.

It is also to be noted that the invention has obtained the facility of adjusting the spring preloading automatically, without impairing the safety features of the pressure meter in terms of protection of the microswitch 5 against water splashes or the like coming from the pressurization chamber 3 in case of accidental breaking of the diaphragm 8.

## Claims

1. An adjustable-sensitivity pressure meter, comprising:
- a base body (2) exhibiting a pressurization chamber (3) put into fluid communication with an environment the pressure variations of which are to be detected;
- a protection cap (4) engaged to said base body (2);
- a detection diaphragm (8) operatively engaged between the base body (2) and the protection cap (4) for hermetically sealing the pressurization chamber (3), said diaphragm (8) being elastically deformable as a result of pressure variations within the pressurization chamber itself;
- transducer means (11) operatively connected to said diaphragm (8) for mechanically transmitting the deformations undergone by the diaphragm itself to a signalling device (5);
- at least one counterspring (14) acting on the diaphragm (8) so as to exert thereon a gauged preloading force in opposition to a pressure existing in the pressurization chamber (3);
- adjusting means (15) acting on said counterspring (14) in order to gauge the value of the preloading force exerted onto the diaphragm (8) by the counterspring itself, characterized in that said adjusting means (15) comprises:
- an adjusting ring nut (16) operatively engaged to the protection cap (4) through respective coupling screw threads (17a, 17b) and acting on said counterspring (14) to selectively cause an increase and a reduction of said preloading force following a screwing action and an unscrewing action of the ring nut itself;
- mesh means (21) operatively engaged by power-driven control means for driving the ring nut (16) in rotation.

2. A pressure meter according to claim 1, characterized in that said mesh means comprises a meshing toothing (21) distributed along a circular perimetric surface exhibited by the adjusting ring nut (16), said toothing (21) being operatively engaged by an actuating pinion gear being part of said power-driven control means.

3. A pressure meter according to claim 1, characterized in that said adjusting ring nut (16) is operatively engaged about a cylindrical end portion (17) of the protection cap (4).

4. A pressure meter according to claim 3, characterized in that the adjusting ring nut (16) is operatively connected to the counterspring (14) through a connecting plate (18) offering a rest wall to the counterspring (14) on the opposite side with respect to the diaphragm (8), and exhibits radial extensions (19) slidably guided through corresponding slots (20) formed in said cylindrical end portion (17) and operating in thrust relationship against said adjusting ring nut.

5. A pressure meter according to claim 3, characterized in that between the connecting plate (18) and the corresponding end of the return spring (14) at least one closing element (23) is engaged, which element exhibits an annular sealing lip (23a) sealingly acting in a slidable manner on an inner cylindrical surface (23b) exhibited by the protection cap (4).

6. A pressure meter according to claim 3, characterized in that said protection cap (4) has vents (22) for evacuating the liquids coming from the pressurization chamber (3) in case of breaking of the diaphragm (8).

7. A pressure meter according to claim 3, characterized in that it further comprises an annular conveying band (24) encircling the closing cap (4) at said vents (22) and provided with at least one outlet nozzle (25) projecting radially outwardly for conveying the liquids away from the protection cap itself.

8. A pressure meter according to claim 1, characterized in that it further comprises coupling means (6) for rigidly engaging the protection cap (4) with the base body (2) upon interposition of a perimetric edge (8a) of said diaphragm (8) between respective holding surfaces (9a, 9b) exhibited by the protection cap and base body respectively.

9. A pressure meter according to claim 8, characterized in that said coupling means (6) comprises fitting teeth (6a) perimetrically distributed along a terminal edge (7) of the base body (2) and arranged to be snap-fitted onto a perimetric coupling border (6b) exhibited by the protection cap (4).

10. A pressure meter according to claim 1, characterized in that said signalling device comprises a microswitch (5) mounted to a support element (26) rotatably engaged to the protection cap (4).

11. A pressure meter according to claim 10, characterized in that said support element (26) is provided with at least one circumferential relief (27) engaged by snap-fit with curved teeth (27a) formed along a cylindrical end portion of the protection cap (4).
